# EUROPEAN PATENT APPLICATION

(11) **EP 4 685 269 A2**
(43) Date of publication of application: **28.01.2026**
(21) Application number: 25173535.3
(22) Date of filing: 30.04.2025
(51) Int. Cl.: C25B 1/04, C25B 9/75, C25B 9/77

(54) **ELECTROLYZER CELL AND ALKALINE WATER ELECTROLYZER**

(30) Priority: 26.07.2024 CN 202411014468
(71) Applicant: Guangzhou SINOMACH Sealing Technology Co., Ltd., Guangzhou, Guangdong 510670 (CN)
(72) Inventor: LIU, Hanqing, Guangzhou, 510670 (CN); LIANG, Huoshou, Guangzhou, 510670 (CN); LAI, Xiushen, Guangzhou, 510670 (CN); MEI, Yuyu, Guangzhou, 510670 (CN); HUANG, Baiqi, Guangzhou, 510670 (CN); CHEN, Yongpei, Guangzhou, 510670 (CN)
(74) Representative: Metida

(57) **Abstract**

The present disclosure relates to an electrolyzer cell. A ring-shaped skeleton is provided between a first sealing ring and a second sealing ring of a sealing gasket, which is able to support the sealing gasket well, avoiding problems such as not fitting in place and excessive compression deformation of the sealing gasket. In addition, in the present disclosure, the sealing gasket, the ring-shaped skeleton, a bipolar plate, nickel meshes are combined to form the electrolyzer cell, which can effectively improve the assembly efficiency, the assembly precision and the sealing of an alkaline water electrolyzer. The electrolyzer cell has a reasonably designed structure, is suitable for long-term use in working environments with alternating pressure and temperature changes, has a long service life, and can be reused.

## Description

### TECHNICAL FIELD

The present disclosure relates to the field of electrolyzers, and in particular relates to an electrolyzer cell and an alkaline water electrolyzer.

### BACKGROUND

An existing alkaline water electrolyzer includes many components, such as a diaphragm, a bipolar plate, and a sealing gasket. An alkaline water electrolyzer may consist of multiple identical electrolyzer cells stacked together, and then the stacked electrolyzer cells are press-fitted by screws. After the press-fitting process, metal end plates are fixed and connected to an electrical system, then an electrolyte is injected, and the alkaline water electrolyzer is connected to a gas pipeline.

As an important component of the alkaline water electrolyzer, the sealing gasket is critical to the overall lifetime and safety of the alkaline water electrolyzer. An existing alkaline water electrolyzer is difficult to assemble, and heat pre-tightening is often required after assembly, so that an existing sealing gasket needs to withstand a large pre-tightening force, resulting in problems such as not fitting in place and excessive compression deformation of the existing sealing gasket, which can further lead to poor sealing of the entire alkaline water electrolyzer after long-term use in working environments with alternating pressure and temperature changes. Therefore, the existing alkaline water electrolyzer is prone to liquid and gas leakage and has a short service life, or even damage occurs to the existing alkaline water electrolyzer. In addition, when maintenance and disassembly of the existing alkaline water electrolyzer are required, the existing sealing gasket cannot be reused and needs to be replaced with a new one.

### SUMMARY OF THE DISCLOSURE

An objective of the present disclosure is to provide an electrolyzer cell and an alkaline water electrolyzer.

In order to achieve the above objective, the present disclosure adopts the following technical solutions.

In a first aspect, the present disclosure provides an electrolyzer cell, which includes a sealing gasket, a ring-shaped skeleton and a bipolar plate, where the sealing gasket includes a gasket body with a ring-shaped structure, and a center of the gasket body is provided with an accommodation area; the gasket body comprises a first sealing ring, a second sealing ring, and a connecting part; one end of the connecting part is connected to the first sealing ring, and an other end of the connecting part is connected to the second sealing ring; the first sealing ring is provided with a first guide hole, and the second sealing ring is provided with a second guide hole; the ring-shaped skeleton is sandwiched between the first sealing ring and the second sealing ring and is provided with a third guide hole; the first guide hole, the third guide hole, and the second guide hole are connected in sequence to form a guide channel, and the guide channel is communicated with the accommodation area through a channel groove; two opposite surfaces of the bipolar plate are each provided with a nickel mesh, and the bipolar plate is provided on the sealing gasket.

As a preferable embodiment of the present disclosure, the bipolar plate is integrally formed with the ring-shaped skeleton.

As a preferred embodiment of the present disclosure, the first sealing ring, the connecting part, and the second sealing ring are integrally formed.

As a preferred embodiment of the present disclosure, a side of the first sealing ring facing away from the second sealing ring is provided with a recess which is communicated with the accommodation area and is adapted to the bipolar plate, and the bipolar plate is accommodated in the recess.

As a preferred embodiment of the present disclosure, a side of the first sealing ring facing away from the second sealing ring is provided with a ring-shaped step which is adapted to the second sealing ring.

As a preferred embodiment of the present disclosure, a side of the first sealing ring facing away from the second sealing ring is provided with a first convex ring, and a side of the second sealing ring facing away from the first sealing ring is provided with a second convex ring.

As a preferred embodiment of the present disclosure, a side of the second sealing ring facing away from the first sealing ring is provided with a groove which is communicated with the accommodation area and is adapted to a diaphragm.

As a preferred embodiment of the present disclosure, there are three or more connecting parts which are located outside the accommodation area and distributed at equal intervals; the ring-shaped skeleton is provided with mounting holes adapted to the connecting parts; one end of each of the connecting parts is connected to the first sealing ring, and an other end of the each of the connecting parts passes through the corresponding mounting hole of the ring-shaped skeleton and then is connected to the second sealing ring.

As a preferred embodiment of the present disclosure, there is one connecting part which is ring-shaped, and the ring-shaped skeleton is mounted externally on the connecting part and in contact with an outer wall of the connecting part.

In a second aspect, the present disclosure provides an alkaline water electrolyzer including at least two electrolyzer cells as described in the first aspect, and the at least two electrolyzer cells are disposed in sequence; for any two adjacent electrolyzer cells, a diaphragm is sandwiched between the first sealing ring of one electrolyzer cell and the second sealing ring of an other electrolyzer cell, and the guide channel of the one electrolyzer cell is interconnected with the corresponding guide channel of the other electrolyzer cell.

As a preferred embodiment of the present disclosure, for the any two adjacent electrolyzer cells, the second sealing ring of the one electrolyzer cell is abutted against an inner side wall of the ring-shaped step of the other electrolyzer cell.

As a preferred embodiment of the present disclosure, the alkaline water electrolyzer further includes two end plates that are tightly connected with each other by bolts, and the electrolyzer cells are arranged between the two end plates; the two end plates are each provided with at least one electrolyte flow hole and at least one gas flow hole.

Compared with the prior art, the present disclosure has the following beneficial effects.

In the present disclosure, the ring-shaped skeleton is provided between the first sealing ring and the second sealing ring of the sealing gasket, which can effectively hold the sealing gasket and avoid problems such as not fitting in place and excessive compression deformation of the sealing gasket.

In addition, in the present disclosure, the sealing gasket, the ring-shaped skeleton, the bipolar plate, and the nickel meshes are combined to form the electrolyzer cell, which can effectively improve assembly efficiency, assembly accuracy, and sealing performance of the electrolyzer.

Besides, the electrolyzer cell provided by the present disclosure has a reasonably designed structure, and is suitable for long-term use in working environments with alternating pressure and temperature changes, so that the electrolyzer cell has a long service life. Further, the electrolyzer cell can be reused.

### BRIEF DESCRIPTION OF DRAWINGS

FIG. 1 is a perspective view of a sealing gasket according to an embodiment of the present disclosure;
FIG. 2 is sectional view of the sealing gasket according to the embodiment of the present disclosure, taken along the A-A line in FIG. 1;
FIG. 3 is an enlarged view of Part A in FIG. 2;
FIG. 4 is an enlarged view of Part B in FIG. 2;
FIG. 5 is a perspective view of an electrolyzer cell according to an embodiment of the present disclosure;
FIG. 6 is a sectional view of the electrolyzer cell according to the embodiment of the present disclosure, taken along the B-B line in FIG.5;
FIG. 7 is an enlarged view of Part C in FIG. 6;
FIG. 8 is a schematic diagram of two electrolyzer cells and a diaphragm in an assembled state according to an embodiment of the present disclosure;
FIG. 9 is a sectional view of the two electrolyzer cells and the diaphragm in the assembled state according to the embodiment of the present disclosure, taken along the C-C line in FIG. 8;
FIG. 10 is an enlarged view of Part D in FIG. 9;
FIG. 11 is a structural schematic diagram of an alkaline water electrolyzer according to an embodiment of the present disclosure;
FIG. 12 is a perspective view of a sealing gasket according to another embodiment of the present disclosure;
FIG. 13 is sectional view of the sealing gasket according to the another embodiment of the present disclosure, taken along the D-D line in FIG. 12;
FIG. 14 is an enlarged view of Part E in FIG. 13;
FIG. 15 is an enlarged view of Part F in FIG. 13;
FIG. 16 is a structural schematic diagram of a bipolar plate and a ring-shaped skeleton according to another embodiment of the present disclosure, which are integrally formed;
FIG. 17 is a perspective view of an electrolyzer cell according to another embodiment of the present disclosure;
FIG. 18 is sectional view of the electrolyzer cell according to the another embodiment of the present disclosure, taken along the F-F line in FIG. 17;
FIG. 19 is an enlarged view of Part G in FIG. 18;
FIG. 20 is a schematic diagram of two electrolyzer cells and a diaphragm in an assembled state according to another embodiment of the present disclosure;
FIG. 21 is a sectional view of the two electrolyzer cells and the diaphragm in the assembled state according to the another embodiment of the present disclosure, taken along the F-F line in FIG. 20; and
FIG. 22 is an enlarged view of Part H in FIG. 21.

In the figures: 1 - sealing gasket, 11 - first sealing ring, 111 - first guide hole, 112 - recess, 113-ring-shaped step, 114 - first convex ring, 12 - second sealing ring, 121 - second guide hole, 122 - groove, 123 - second convex ring, 13 - connecting part, 14 - channel groove, 141 - sealing strip, 15-accommodation area, 16- boss; 17-first through hole, 2 - ring-shaped skeleton, 21-third guide hole, 22-mounting hole, 23-positioning lug, 24-second through hole, 3-bipolar plate, 31-projection, 4-diaphragm, 5-support plate, 6-end plate, 61-electrolyte flow hole, and 62-gas flow hole.

### DETAILED DESCRIPTION

In order to better illustrate the objective, technical solutions and advantages of the present disclosure, the present disclosure will be further described hereinafter in conjunction with specific embodiments.

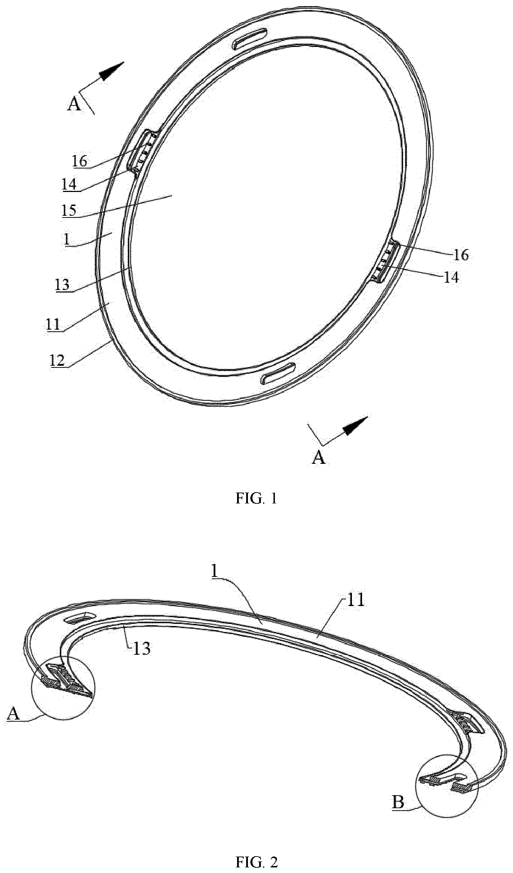

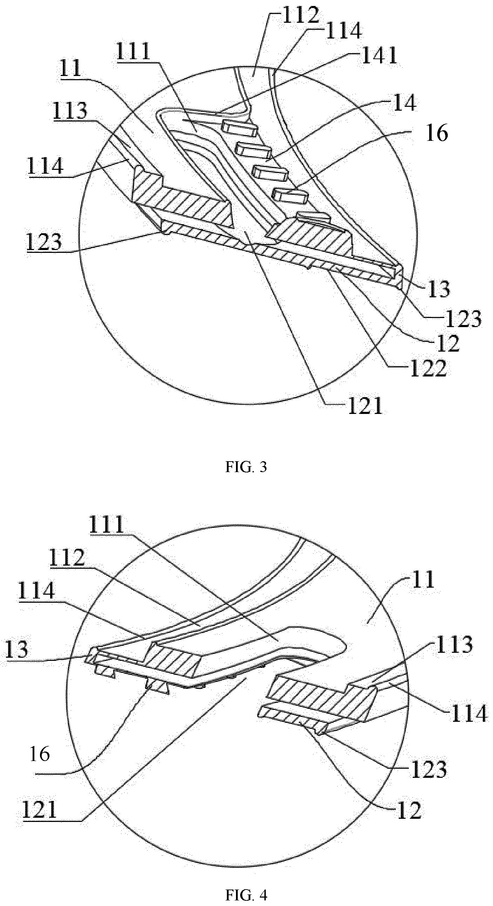

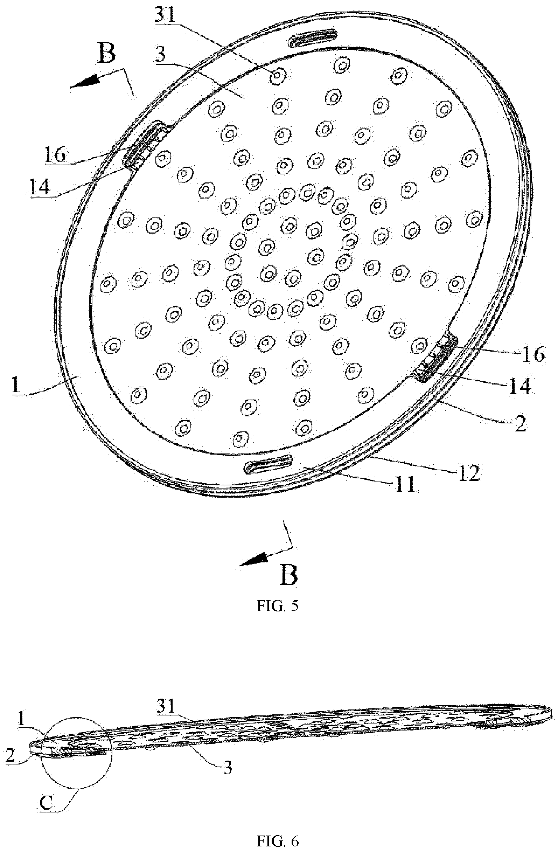

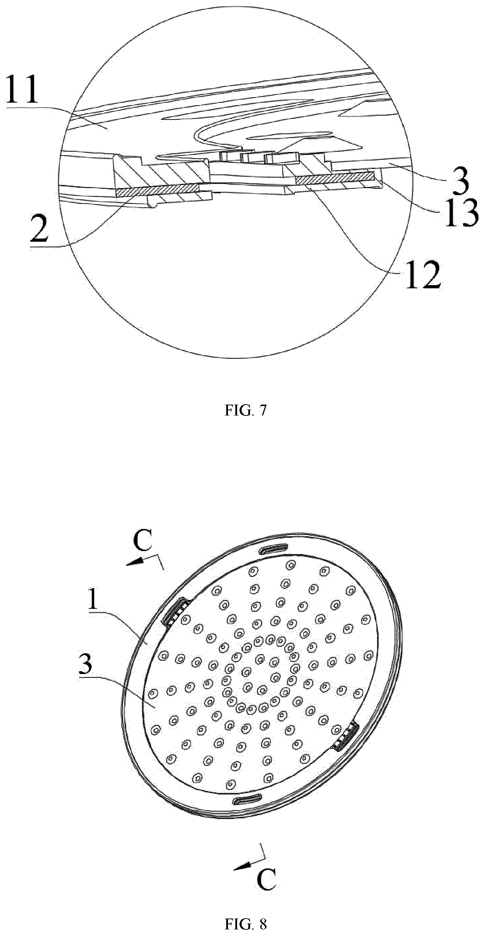

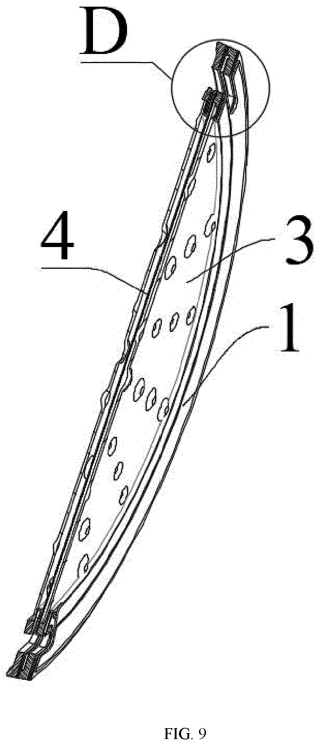

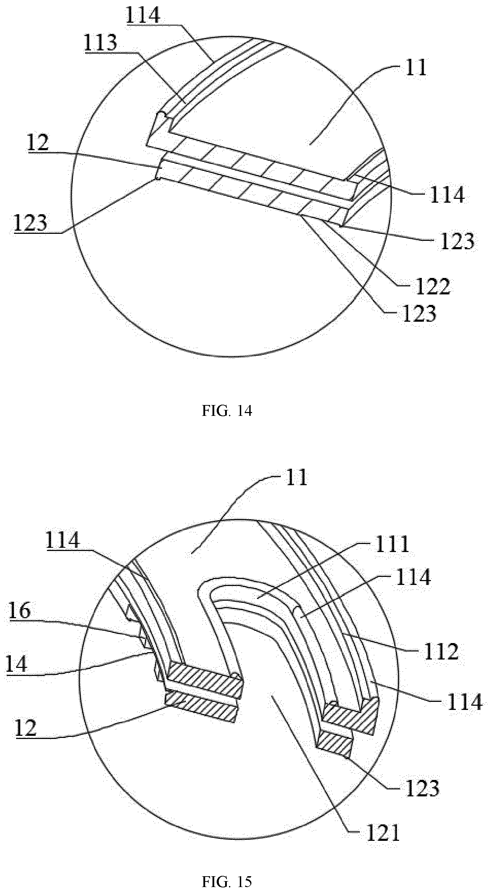

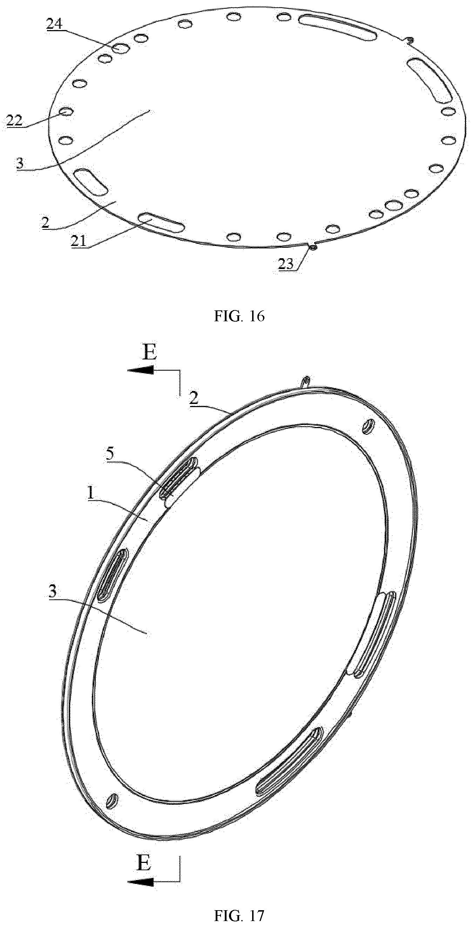

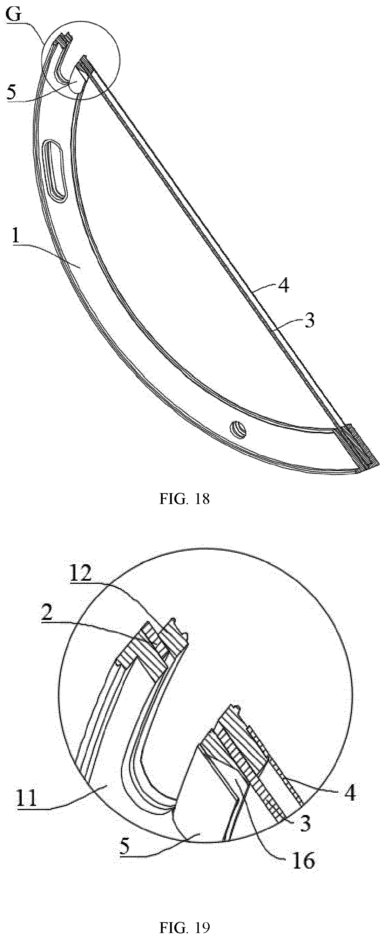

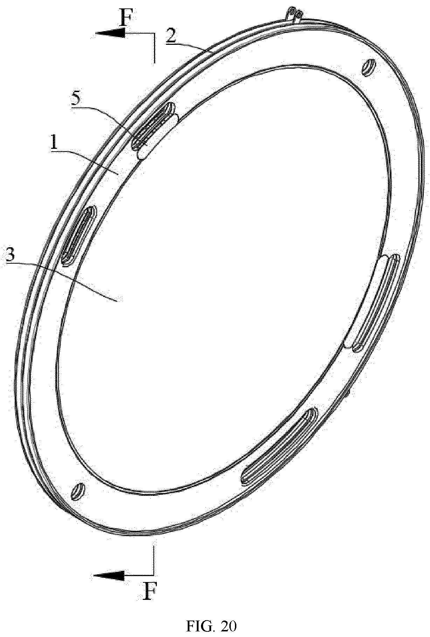

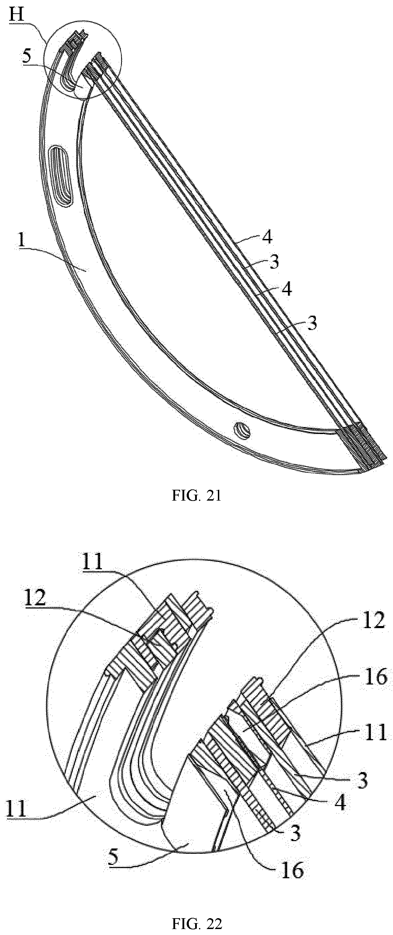

With reference to FIGs.1-22, in a first aspect, an electrolyzer cell is provided in the present disclosure, comprising a sealing gasket 1, a ring-shaped skeleton 2, and a bipolar plate 3. The sealing gasket 1 comprises a gasket body with a ring-shaped structure, and a center of the gasket body is provided with an accommodation area 15. The gasket body comprises a first sealing ring 11, a second sealing ring 12, and a connecting part 13. The first sealing ring 11 and the second sealing ring 12 are interconnected through the connecting part 13. The first sealing ring 11 is provided with a first guide hole 111, and the second sealing ring 12 is provided with a second guide hole 121. The ring-shaped skeleton 2 is sandwiched between the first sealing ring 11 and the second sealing ring 12. The ring-shaped skeleton 2 is provided with a third guide hole 21, and the first guide hole 111, the third guide hole 21, and the second guide hole 121 are connected in sequence to form a guide channel. The guide channel is communicated with the accommodation area 15 through a channel groove 14. Two opposite surfaces of the bipolar plate 3 are each provided with a nickel mesh (not shown), and the bipolar plate 3 is provided on the sealing gasket 1.

In the present disclosure, the ring-shaped skeleton 2 is provided between the first sealing ring 11 and the second sealing ring 12, which can effectively hold the sealing gasket 1 and avoid problems such as not fitting in place and excessive compression deformation of the sealing gasket 1. In addition, the sealing gasket 1, the ring-shaped skeleton 2, the bipolar plate 3, and the nickel meshes are combined together to form the electrolyzer cell, which can effectively improve assembly efficiency and assembly accuracy of the electrolyzer, and can also effectively improve sealing performance of the electrolyzer.

In an embodiment, the first sealing ring 11, the connecting part 13, and the second sealing ring 12 are integrally formed.

In an embodiment, the sealing gasket 1 is made of rubber which is at least one of thermoplastic rubber and thermosetting rubber.

It should be understood that there is no particular limitation on the way of integral forming in the present disclosure, and the integral forming can be performed through pouring, molding, machining, injection, or welding.

For example, the first sealing ring 11, the ring-shaped skeleton 2 and the second sealing ring 12 are integrally formed through the following steps: positioning the ring-shaped skeleton 2 in a positioning groove of an injection mold, injecting mixed rubber components into the injection mold, and forming the sealing gasket 1 after vulcanization. For another example, the first sealing ring 11, the ring-shaped skeleton 2 and the second sealing ring 12 are integrally formed through the following steps: placing a semi-finished strip of rubber on a bottom of a mold, placing the ring-shaped skeleton 2 on the strip, providing a loop of semi-finished rubber strip of another rubber around the ring-shaped skeleton 2, and forming the sealing gasket 1 after vulcanization. Such methods reduce processing costs of the electrolyzer cell.

In an embodiment, the first sealing ring 11 and the second sealing ring 12 are each provided with a first through hole 17, and the first through hole of the first sealing ring 11 corresponds to the first through hole of the second sealing ring 12. The ring-shaped skeleton 2 is provided with a second through hole 24 corresponding to the first through hole 17, and the first through holes 17 of the first sealing ring 11 and the second sealing ring 12 and the second through hole 24 are communicated to form a heat exchange channel for a refrigerating medium (such as alkali liquid). There are two or more heat exchange channels which are distributed at equal intervals. When the alkaline water electrolyzer is in operation, the alkali liquid can be introduced into the heat exchange channels through a pipeline for heat exchange, so that the alkali liquid can be preheated and the alkaline water electrolyzer can be cooled down.

In an embodiment, a side of the first sealing ring 11 facing away from the second sealing ring 12 is provided with a recess 112 which is interconnected with the accommodation area 15 and is adapted to the bipolar plate 3, and the bipolar plate 3 is snap-fitted in the recess 112.

In an embodiment, a side of the first sealing ring 11 facing away from the second sealing ring 12 is provided with a ring-shaped step 113 which is adapted to the second sealing ring 12.

In an embodiment, a side of the second sealing ring 12 facing away from the first sealing ring 11 is provided with a groove 122, and the groove 122 is communicated with the accommodation area 15 and adapted to the diaphragm 4.

Compared with an existing alkaline water electrolyzer, the recess 112, the ring-shaped step 113 and the groove 122 are designed in the present disclosure so that it is not necessary to carry out heat-induced locking after the alkaline water electrolyzer is assembled, which effectively improves assembly efficiency and assembly accuracy of the alkaline water electrolyzer.

In an embodiment, a side of the first sealing ring 11 facing away from the second sealing ring 12 is provided with a first convex ring 114.

Specifically, there are two or more first convex rings 114. For example, the side of the first sealing ring 11 facing away from the second sealing ring 12 is provided with at least one first convex ring 114 selected from a group consisting of the following (I)-(III): (I) a first convex ring 114 extending along an inner edge of the recess 112, (II) a first convex ring 114 extending along an outer edge of the ring-shaped step 113, and (III) a first convex ring 114 encircling an opening of the first guide hole 111.

In an embodiment, a side of the second sealing ring 12 facing away from the first sealing ring 11 is provided with a second convex ring 123.

Specifically, there are two or more second convex rings 123. For example, the side of the second sealing ring 12 facing away from the first sealing ring 11 is provided with at least one second convex rings 123 selected from a group consisting of the following (a)-(c): (a) a second convex ring 123 extending along an inner edge of the groove 122, (b) a second convex ring 123 extending along an outer edge of the second sealing ring 12, and (c) a second convex ring 123 encircling an opening of the second guide hole 121.

After the alkaline water electrolyzer is assembled, the first convex rings 114 and the second convex rings 123 are each subjected to a higher stress, which can play a certain role in supporting, and at the same time help to improve the sealing performance of the alkaline water electrolyzer.

It can be understood that there is no particular limitation on sizes and sectional shapes of the first convex ring 114 and the second convex ring 123 in the present disclosure, and those skilled in the art can design the sizes and cross-sectional shapes of the first and second convex rings according to actual needs. For example, the cross-sectional shapes of the first and second convex rings are each semi-circular. For example, the dimensions of the first and second convex rings are each designed according to the sealing forces that the first and second sealing rings are required to withstand during assembly and during operation of the alkaline water electrolyzer. For example, a ratio of a height of the first convex ring 114 to a thickness of the first sealing ring 11 is (0.0001-0.2):1, and a ratio of a height of the second convex ring 123 to a thickness of the second sealing ring 12 is (0.0001-0.2): 1.

In an embodiment, there are three or more connecting parts 13 which are located outside the accommodation area 15 and distributed at equal intervals. The ring-shaped skeleton 2 is provided with mounting holes 22 adapted to the connecting parts 13. One end of each of the connecting parts 13 is connected to the first sealing ring 11, and the other end of the each of the connecting parts 13 passes through the corresponding mounting hole 22 of the ring-shaped skeleton 2 and then is connected to the second sealing ring 12.

It should be understood that there is no particular limitation on the shapes of the connecting parts 13 in the present disclosure, and those skilled in the art can design them according to actual situations. For example, the connecting parts 13 are each in a shape of a circular truncated cone, a cylinder, a polygon prism, or a cylindroid.

In an embodiment, there is one connecting part 13 which is ring-shaped, and the ring-shaped skeleton 2 is mounted externally on the connecting part 13 and in contact with an outer wall of the connecting part 13.

In an embodiment, the number of the guide channels and the number of the channel grooves 14 are equal, and both are two or more. At least one channel groove 14 of the two or more channel grooves 14 is provided on the first sealing ring 11, and the remaining channel grooves 14 are provided on the second sealing ring 12. The channel grooves 14 provided on the second sealing ring 12 are in communication with the groove 122.

In an embodiment, a sealing strip 141 is provided along a periphery of the opening of the channel groove 14. The sealing strip 141 is provided to improve the sealing performance of the electrolyzer cell.

In an embodiment, the channel groove 14 is provided with a boss 16. Preferably, there are two or more bosses 16 distributed at equal intervals.

In the present disclosure, the bosses 16 provided in the channel groove 14 can further ensure that the channel groove 14 will not be blocked due to the compression of the sealing gasket 1 during the assembly process of the electrolyzer.

For example, the channel groove 14 is provided with two rows of bosses 16, there are two or more bosses 16 in each row, which are distributed at equal intervals. There is a gap between the two rows of bosses 16.

In an embodiment, the bipolar plate 3 is integrally formed with the ring-shaped skeleton 2 to form a plate-like structure.

In an embodiment, the ring-shaped skeleton 2 is made of at least one of a metal material and a non-metal material. The non-metal material is at least one of a sheet molding compound (SMC), polyurethane, epoxy resin, an unsaturated polyester, and a polyacrylate.

**In** an embodiment, an outer wall of the ring-shaped skeleton 2 is provided with a positioning lug 23, and the positioning lug 23 is provided with a positioning hole. The positioning lug and positioning hole are provided to facilitate alignment of various electrolyzer cells during assembly of the alkaline water electrolyzer, which is conducive to improving assembly efficiency.

**In** an embodiment, the bipolar plate 3 is made of a metal material.

**In** an embodiment, two opposite surfaces of the bipolar plate 3 are each provided with a plurality of projections 31 adapted to mesh holes of the respective nickel meshes. During assembly, the nickel meshes are overlaid on respective surfaces of the bipolar plate 2, and the projections 31 are snap-fitted in the respective mesh holes of the respective nickel meshes.

In an embodiment, a width of the ring-shaped skeleton 2 is not less than a width of the first sealing ring 11, and the width of the ring-shaped skeleton 2 is not less than a width of the second sealing ring 12.

With reference to FIGs. 1 to 22, in a second aspect, an alkaline water electrolyzer is provided in the present disclosure, including at least two electrolyzer cells which are sequentially arranged; for any two adjacent electrolyzer cells, a diaphragm 4 is sandwiched between the first sealing ring 11 of one electrolyzer cell and the second sealing ring 12 of an other electrolyzer cell, there is a gap between the diaphragm 4 and one of the nickel meshes which is adjacent to diaphragm 4, and the guide channel of the one electrolyzer cell is communicated with the corresponding guide channel of the other electrolyzer cell.

In an embodiment, for any two adjacent electrolyzer cells, the second sealing ring 12 of one electrolyzer cell is abutted against an inner sidewall of the ring-shaped step 113 of an other electrolyzer cell.

In an embodiment, for any two adjacent electrolyzer cells, the heat exchange channel of one electrolyzer cell is in communication with the heat exchange channel of an other electrolyzer cell.

In an embodiment, the groove 122 of one electrolyzer cell is coordinated with the first sealing ring 11 of an other electrolyzer cell to form a diaphragm receiving groove with an opening facing the accommodation area 15, and the diaphragm 4 is snap-fitted in the diaphragm receiving groove.

Specifically, the diaphragm 4 is abutted against the bosses 16 in the corresponding channel groove 14.

More specifically, a support plate 5 is provided between the diaphragm 4 and the bosses 16 in the corresponding channel groove 14. The support plate 5 is made of a metal material, or a plastic material with a hardness greater than a hardness of the diaphragm 4 and a hardness of the sealing gasket 1.

In an embodiment, the alkaline water electrolyzer further comprises two end plates 6. The electrolyzer cells are provided between the two end plates 6, and the two end plates 6 are tightly connected by bolts.

Specifically, the end plates 6 are each provided with at least one electrolyte flow hole 61 and at least one gas flow hole 62.

More specifically, the end plates 6 are each provided with an accommodating groove adapted to the sealing gasket 1. During assembly of the alkaline water electrolyzer, the sealing gaskets 1 located at the head and tail ends are accommodated in the respective accommodating grooves, and outer walls of the sealing gaskets 1 are in close contact with inner walls of the respective accommodating grooves, thereby achieving a good sealing effect.

It should be understood that in the present disclosure, there is no particular limitation on shapes and sizes of various components, such as the ring-shaped skeleton 2, the bipolar plate 3, the first sealing ring 11, the second sealing ring 12, and the diaphragm 4. Those skilled in the art can design the shapes and sizes of the various components according to actual situations. For example, the ring-shaped skeleton 2, the first sealing ring 11, and the second sealing ring 12 are each in a shape of a circular ring, an oval ring, or a polygonal ring, and the diaphragm 4 and the bipolar plate 3 are each in a shape of a circle, an oval, or a polygon. Preferably, the ring-shaped skeleton 2, the first sealing ring 11, and the second sealing ring 12 are each in a shape of a circular ring, and the diaphragm 4 and the bipolar plate 3 are each in a shape of a circle.

The following examples are provided in the present disclosure to facilitate understanding of the present disclosure. The scope of the present disclosure is not limit to these examples, and is defined by the attached claims.

### Example 1

With reference to FIGs. 1 to 11, an electrolyzer cell and an alkaline water electrolyzer are provided in this example.

The electrolyzer cell comprises a sealing gasket 1, a ring-shaped skeleton 2 and a bipolar plate 3. The sealing gasket 1 comprises a gasket body with a ring-shaped structure, and a center of the gasket body is provided with an accommodation area 15. The gasket body comprises a first sealing ring 11, a second sealing ring 12 and a connecting part 13. The first sealing ring 11 and the second sealing ring 12 are connected with each other through the connecting part 13. The first sealing ring 11 is provided with a first guide hole 111, and the second sealing ring 12 is provided with a second guide hole 121. The ring-shaped skeleton 2 is sandwiched between the first sealing ring 11 and the second sealing ring 12. The ring-shaped skeleton 2 is provided with a third guide hole 21, and the first guide hole 111, the third guide hole 21, and the second guide hole 121 are connected in sequence to form a guide channel. The guide channel is communicated with the accommodation area 15 through a channel groove 14. Two opposite surfaces of the bipolar plate 3 are each provided with a nickel mesh (not shown), and the bipolar plate 3 is provided on the sealing gasket 1.

The sealing gasket 1 is made of rubber. The first sealing ring 11, the connecting part 13, and the second sealing ring 12 are integrally formed. The connection part 13 is ring-shaped. The ring-shaped skeleton 2 is mounted externally on the connecting part 13 and in contact with an outer wall of the connecting part 13. Specifically, the ring-shaped skeleton 2 is positioned in a positioning groove of an injection mold, mixed rubber components are injected into the injection mold, and then the sealing gasket 1 is formed after vulcanization.

A side of the first sealing ring 11 facing away from the second sealing ring 12 is provided with a recess 112 which is interconnected with the accommodation area 15 and is adapted to the bipolar plate 3, and the bipolar plate 3 is accommodated in the recess 112. The side of the first sealing ring 11 facing away from the second sealing ring 12 is provided with a ring-shaped step 113 which is adapted to the second sealing ring 12. A side of the second sealing ring 12 facing away from the first sealing ring 11 is provided with a groove 122, and the groove 122 is communicated with the accommodation area 15 and adapted to a diaphragm 4. In this embodiment, the sealing gasket 1 is provided with the recess 112, the ring-shaped step 113 and the groove 122 so that it is not necessary to carry out heat-induced locking after the alkaline water electrolyzer is assembled, which effectively improves assembly efficiency and assembly accuracy of the alkaline water electrolyzer.

The number of the guide channels and the number of the channel grooves 14 are equal, and both are two or more. At least one channel groove 14 of the two or more channel grooves 14 is provided on the first sealing ring 11, and the remaining channel grooves 14 are provided on the second sealing ring 12. Each of the channel grooves 14 is provided with a boss 16. Preferably, there are two or more bosses 16 distributed at equal intervals. The bosses 16, which are made of a rigid material, provided in the channel grooves 14 can further ensure that the channel grooves 14 will not be blocked due to the compression of the sealing gasket 1 during the assembly process of the alkaline water electrolyzer and that the diaphragm 4 can be held very well.

The side of the first sealing ring 11 facing away from the second sealing ring 12 is provided with a first convex ring 114 selected from a group consisting of the following (I)-(III): (I) a first convex ring 114 extending along an inner edge of the recess 112, (II) a first convex ring 114 extending along an outer edge of the ring-shaped step 113, and (III) a first convex ring 114 encircling an opening of the first guide hole 111. A side of the second sealing ring 12 facing away from the first sealing ring 11 is provided with a second convex ring 123 selected from a group consisting of the following (a)-(c): (a) a second convex ring 123 extending along an inner edge of the groove 122, (b) a second convex ring 123 extending along an outer edge of the second sealing ring 12, and (c) a second convex ring 123 encircling an opening of the second guide hole 121. A sealing strip 141 is provided along a periphery of the opening of each of the channel grooves 14. In this embodiment, the first convex ring 114, the second convex ring 123 and the sealing strips 141, which are provided on the sealing gasket 1, can play a certain role in supporting, and at the same time help to improve the sealing performance of the electrolyzer cell.

The ring-shaped skeleton 2 is made of a metal material.

The bipolar plate 3 is made of a metal material. Two opposite surface of the bipolar plate 3, in a region corresponding to the accommodation area 15, are each provided with a plurality of projections 31 adapted to mesh holes of each of the nickel meshes. During assembly, the nickel meshes are respectively overlaid on the two opposite surface of the bipolar plate 2, and the projections 31 are inserted into the mesh holes of the respective nickel meshes.

The alkaline water electrolyzer includes at least two electrolyzer cells which are sequentially arranged; for any two adjacent electrolyzer cells, the diaphragm 4 is sandwiched between the first sealing ring 11 of one electrolyzer cell and the second sealing ring 12 of an other electrolyzer cell, there is a gap between the diaphragm 4 and one of the nickel meshes which is adjacent to diaphragm 4, the guide channel of the one electrolyzer cell is communicated with the corresponding guide channel of the other electrolyzer cell, and the second sealing ring 12 of the one electrolyzer cell is abutted against an inner side wall of the ring-shaped step 113 of the other electrolyzer cell.

For any two adjacent electrolyzer cells, the groove 122 of one electrolyzer cell is coordinated with the first sealing ring 11 of an other electrolyzer cell to form a diaphragm receiving groove with an opening facing the accommodation area 15, and the diaphragm 4 is snap-fitted in the diaphragm receiving groove. The diaphragm 4 is abutted against the bosses 16 in the corresponding channel groove 14.

The alkaline water electrolyzer further comprises two end plates 6. The electrolyzer cells are provided between the two end plates 6, and the two end plates 6 are tightly connected by bolts. The end plates 6 are each provided with at least one electrolyte flow hole 61 and at least one gas flow hole 62. The end plates 6 are each provided with an accommodating groove adapted to the sealing gasket 1. During assembly of the alkaline water electrolyzer, the sealing gaskets 1 located at the head and tail ends are accommodated in the respective accommodating grooves, and outer walls of the sealing gaskets 1 are in close contact with inner walls of the respective accommodating grooves, thereby achieving a good sealing effect.

### Example 2

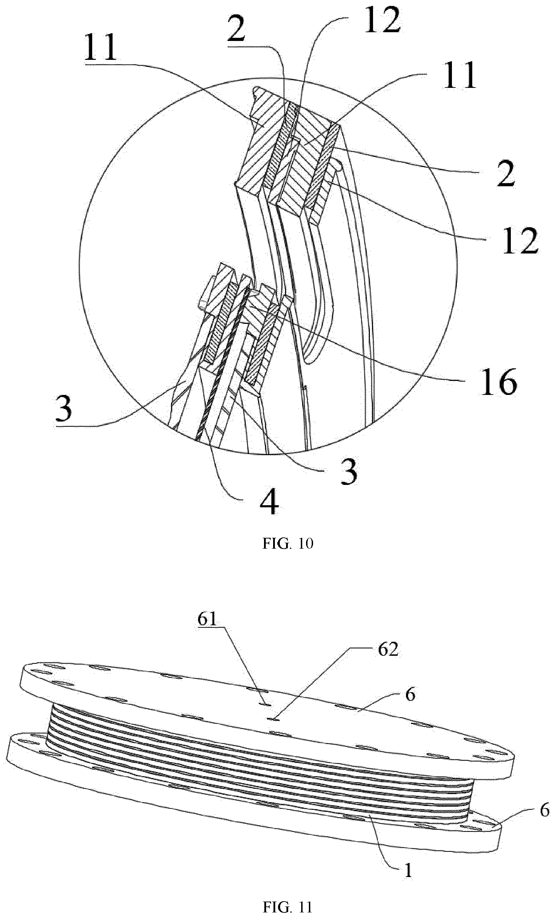

With reference to FIGs. 11 to 22, an electrolyzer cell and an alkaline water electrolyzer are provided in this example.

The electrolyzer cell comprises a sealing gasket 1, a ring-shaped skeleton 2 and a bipolar plate 3. The sealing gasket 1 comprises a gasket body with a ring-shaped structure, and a center of the gasket body is provided with an accommodation area 15. The gasket body comprises a first sealing ring 11, a second sealing ring 12 and a connecting part 13. The first sealing ring 11 and the second sealing ring 12 are connected with each other through the connecting part 13. The first sealing ring 11 is provided with a first guide hole 111, and the second sealing ring 12 is provided with a second guide hole 121. The ring-shaped skeleton 2 is sandwiched between the first sealing ring 11 and the second sealing ring 12. The ring-shaped skeleton 2 is provided with a third guide hole 21, and the first guide hole 111, the third guide hole 21, and the second guide hole 121 are connected in sequence to form a guide channel. The guide channel is communicated with the accommodation area 15 through a channel groove 14. Two opposite surfaces of the bipolar plate 3 are each provided with a nickel mesh (not shown), and the bipolar plate 3 is provided on the sealing gasket 1.

The bipolar plate 3 and the ring-shaped skeleton 2 are both made of a metal material. The bipolar plate 3 and the ring-shaped skeleton 2 are integrally formed into a plate-like structure. An outer wall of the ring-shaped skeleton 2 is provided with a positioning lug 23, and the positioning lug 23 is provided with a positioning hole. The positioning lug and positioning hole are provided to facilitate alignment of various electrolyzer cells during assembly of the alkaline water electrolyzer, which is conducive to improving assembly efficiency.

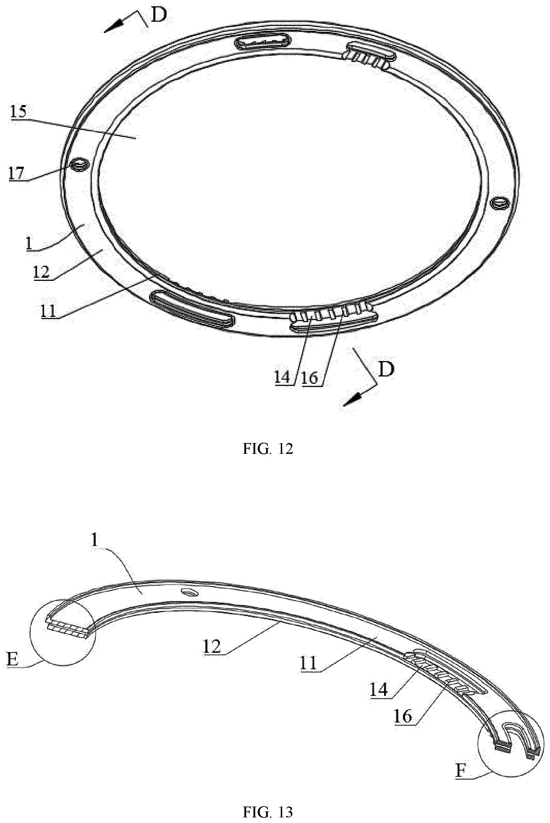

Two opposite surfaces of the bipolar plate 3 are each provided with a plurality of projections (not shown in FIGs.12 to 22) adapted to mesh holes of the respective nickel meshes. During assembly, the nickel meshes are respectively overlaid on the two opposite surface of the bipolar plate 2, and the projections are inserted into the mesh holes of the respective nickel meshes.

The first sealing ring 11, the connecting part 13, and the second sealing ring 12 are integrally formed. The sealing gasket 1 is made of rubber, and the rubber comprises at least one of thermoplastic rubber and thermosetting rubber. The number of the connecting parts 13 (not shown in FIGs.12-22) is three or more. The three or more connecting parts 13 are located outside the accommodation area 15 and are distributed at equal intervals. The ring-shaped skeleton 2 is provided with mounting holes 22 adapted to the connecting parts 13. One end of each of the connecting parts 13 is connected to the first sealing ring 11, and the other end of the each of the connecting parts 13 passes through the corresponding mounting hole 22 of the ring-shaped skeleton 2 and then is connected to the second sealing ring 12. The first sealing ring 11, the ring-shaped skeleton 2 and the second sealing ring 12 are integrally formed through the following steps: placing a semi-finished strip of rubber on a bottom of a mold, placing the plate-like structure on the strip, providing a loop of semi-finished rubber strip of another rubber around the ring-shaped skeleton 2 of the plate-like structure, and forming the sealing gasket 1 after vulcanization. Such a method reduces processing costs of the electrolyzer cell.

The first sealing ring 11 and the second sealing ring 12 are each provided with a first through hole 17, and the first through hole of the first sealing ring 11 corresponds to the first through hole of the second sealing ring 12. The ring-shaped skeleton 2 is provided with a second through hole 24 corresponding to the first through holes 17, and the first through holes 17 of the first sealing ring 11 and the second sealing ring 12 and the second through hole 24 are communicated to form a heat exchange channel for a refrigerating medium (such as alkali liquid). There are two or more heat exchange channels which are distributed at equal intervals. When the alkaline water electrolyzer is in operation, the alkali liquid can be introduced into the heat exchange channels through a pipeline for heat exchange, so that the alkali liquid can be preheated and the alkaline water electrolyzer can be cooled down.

A side of the first sealing ring 11 facing away from the second sealing ring 12 is provided with a recess 112 which is interconnected with the accommodation area 15 and is adapted to the bipolar plate 3, and the bipolar plate 3 is accommodated in the recess 112. The side of the first sealing ring 11 facing away from the second sealing ring 12 is provided with a ring-shaped step 113 which is adapted to the second sealing ring 12. A side of the second sealing ring 12 facing away from the first sealing ring 11 is provided with a groove 122, and the groove 122 is communicated with the accommodation area 15 and adapted to a diaphragm 4. In this example, the recess 112, the ring-shaped step 113 and the groove 122 are provided on the sealing gasket 1 so that it is not necessary to carry out heat-induced locking after the alkaline water electrolyzer is assembled, which effectively improves assembly efficiency and assembly accuracy of the alkaline water electrolyzer.

The number of the guide channels and the number of the channel grooves 14 are equal, and both are two or more. At least one channel groove 14 of the two or more channel grooves 14 is provided on the first sealing ring 11, and the remaining channel grooves 14 are provided on the second sealing ring 12. Each of the channel grooves 14 is provided with a boss 16. Preferably, there are two or more bosses 16 distributed at equal intervals. The bosses 16, which are made of a rigid material, provided in the channel grooves 14 can further ensure that the channel grooves 14 will not be blocked due to the compression of the sealing gasket 1 during the assembly process of the electrolyzer, and that the diaphragm 4 can be held very well.

The side of the first sealing ring 11 facing away from the second sealing ring 12 is provided with a first convex ring 114 selected from a group consisting of the following (I)-(III): (I) a first convex ring 114 extending along an inner edge of the recess 112, (II) a first convex ring 114 extending along an outer edge of the ring-shaped step 113, and (III) a first convex ring 114 encircling an opening of the first guide hole 111. A side of the second sealing ring 12 facing away from the first sealing ring 11 is provided with a second convex rings 123 selected from a group consisting of the following (a)-(c): (a) a second convex ring 123 extending along an inner edge of the groove 122, (b) a second convex ring 123 extending along an outer edge of the second sealing ring 12, and (c) a second convex ring 123 encircling an opening of the second guide hole 121. A sealing strip 141 is provided along the periphery of the opening of each of the channel grooves 14. In this example, the first convex ring 114, the second convex ring 123 and the sealing strips 141, which are provided on the sealing gasket 1, can play a certain role in supporting, and at the same time help to improve the sealing performance of the electrolyzer.

The alkaline water electrolyzer includes at least two electrolyzer cells which are sequentially arranged; for any two adjacent electrolyzer cells, the diaphragm 4 is sandwiched between the first sealing ring 11 of one electrolyzer cell and the second sealing ring 12 of an other electrolyzer cell, there is a gap between the diaphragm 4 and one of the nickel meshes which is adjacent to diaphragm 4, the guide channel of the one electrolyzer cell is communicated with the corresponding guide channel of the other electrolyzer cell, the second sealing ring 12 of the one electrolyzer cell is abutted against an inner side wall of the ring-shaped step 113 of the other electrolyzer cell, and the heat exchange channel of the one electrolyzer cell is communicated with the heat exchange channel of the other electrolyzer cell.

In any two adjacent electrolyzer cells, the groove 122 of one electrolyzer cell is coordinated with the first sealing ring 11 of an other electrolyzer cell to form a diaphragm receiving groove with an opening facing the accommodation area 15, and the diaphragm 4 is snap-fitted in the diaphragm receiving groove. The diaphragm 4 is abutted against the bosses 16 in the corresponding channel groove 14.

A support plate 5 is provided between the diaphragm 4 and the bosses 16 in the corresponding channel grooves 14. The support plate 5 is made of a metal material, or a plastic material with a hardness greater than a hardness of the diaphragm 4 and a hardness of the sealing gasket 1. The support plate 5 is provided to provide good support for the diaphragm 4.

The alkaline water electrolyzer further comprises two end plates 6. The electrolyzer cells are provided between the two end plates 6, and the two end plates 6 are tightly connected by bolts. The end plates 6 are each provided with at least one electrolyte flow hole 61 and at least one gas flow hole 62. The end plates 6 are each provided with an accommodating groove adapted to the sealing gasket 1. During assembly of the alkaline water electrolyzer, the sealing gaskets 1 located at the head and tail ends are accommodated in the respective accommodating grooves, and outer walls of the sealing gaskets 1 are in close contact with inner walls of the respective accommodating grooves, thereby achieving a good sealing effect.

It should be noted that throughout the description of the present disclosure, the terms "first", "second" and the like are only used for descriptive purposes and cannot be understood as indicating the number of technical features indicated. Therefore, a feature defined by the terms "first", "second" and the like may explicitly or implicitly include at least one such feature. All directional indications (e.g., upper and lower) throughout the present disclosure are only used to explain relative position relationships, motion, etc. of components in a specific state (as shown in the accompanying figure). If the specific state changes, the directional indications will change accordingly.

It should also be noted that the terms "comprising", "including" and "having", as well as any variations thereof, in the description of the present disclosure, are intended to cover non-exclusive inclusions.

It should also be noted that the term "communication" or "connection" should be understood in a broad sense, unless otherwise specified and limited. For example, it means direct communication or connection, or indirect communication or connection by means of an intermediate medium.

The specific meanings of the above terms in the present disclosure can be understood by those skilled in the art according to actual situations.

Finally, it should be noted that the above embodiments are only intended to illustrate the technical solutions of the present disclosure, rather than to limit the scope of protection of the present disclosure. Although the present disclosure has been described in detail with reference to the preferred embodiments, those skilled in the art should understand that modifications or equivalent replacements can be made to the technical solutions of the present disclosure, without departing from the essence and scope of the technical solution of the present disclosure.

## Claims

1. An electrolyzer cell, **characterized in that** the electrolyzer cell comprises a sealing gasket, a ring-shaped skeleton and a bipolar plate,
wherein the sealing gasket comprises a gasket body with a ring-shaped structure, and a center of the gasket body is provided with an accommodation area; the gasket body comprises a first sealing ring, a second sealing ring, and a connecting part; one end of the connecting part is connected to the first sealing ring, and an other end of the connecting part is connected to the second sealing ring; the first sealing ring is provided with a first guide hole, and the second sealing ring is provided with a second guide hole;
the ring-shaped skeleton is sandwiched between the first sealing ring and the second sealing ring and is provided with a third guide hole; the first guide hole, the third guide hole, and the second guide hole are connected in sequence to form a guide channel, and the guide channel is communicated with the accommodation area through a channel groove;
two opposite surfaces of the bipolar plate are each provided with a nickel mesh, and the bipolar plate is provided on the sealing gasket.

2. The electrolyzer cell as claimed in claim 1, **characterized in that** the bipolar plate is integrally formed with the ring-shaped skeleton.

3. The electrolyzer cell as claimed in claim 1, **characterized in that** a side of the first sealing ring facing away from the second sealing ring is provided with a recess which is communicated with the accommodation area and is adapted to the bipolar plate, and the bipolar plate is accommodated in the recess.

4. The electrolyzer cell as claimed in claim 1, **characterized in that** the first sealing ring, the connecting part, and the second sealing ring are integrally formed.

5. The electrolyzer cell as claimed in claim 1, **characterized in that** a side of the first sealing ring facing away from the second sealing ring is provided with a ring-shaped step which is adapted to the second sealing ring;
the side of the first sealing ring facing away from the second sealing ring is provided with a first convex ring, and a side of the second sealing ring facing away from the first sealing ring is provided with a second convex ring.

6. The electrolyzer cell as claimed in claim 1, **characterized in that** a side of the second sealing ring facing away from the first sealing ring is provided with a groove which is communicated with the accommodation area and is adapted to a diaphragm.

7. The electrolyzer cell as claimed in claim 1, **characterized in that** there are three or more connecting parts which are located outside the accommodation area and distributed at equal intervals; the ring-shaped skeleton is provided with mounting holes adapted to the connecting parts; one end of each of the connecting parts is connected to the first sealing ring, and an other end of the each of the connecting parts passes through the corresponding mounting hole of the ring-shaped skeleton and then is connected to the second sealing ring.

8. The electrolyzer cell as claimed in claim 1, **characterized in that** there is one connecting part which is ring-shaped, and the ring-shaped skeleton is mounted externally on the connecting part and in contact with an outer wall of the connecting part.

9. An alkaline water electrolyzer, **characterized in that** the alkaline water electrolyzer comprises at least two electrolyzer cells as claimed in any one of claims 1 to 8, and the at least two electrolyzer cells are disposed in sequence; for any two adjacent electrolyzer cells, a diaphragm is sandwiched between the first sealing ring of one electrolyzer cell and the second sealing ring of an other electrolyzer cell, and the guide channel of the one electrolyzer cell is interconnected with the corresponding guide channel of the other electrolyzer cell.

10. The alkaline water electrolyzer as claimed in claim 9, **characterized in that** for the any two adjacent electrolyzer cells, the second sealing ring of the one electrolyzer cell is abutted against an inner side wall of the ring-shaped step of the other electrolyzer cell.
